# EUROPÄISCHE PATENTSCHRIFT

(11) **EP 0 317 549 B1**
(45) Veröffentlichungstag und Bekanntmachung des Hinweises auf die Patenterteilung: **21.09.1994**
(21) Anmeldenummer: 89100129.9
(22) Anmeldetag: 24.06.1985
(51) Int. Cl.: A01B 49/02

(54) **Gerätekombination zur Bodenlockerung und Krümelung einer obersten Bodenschicht**
Combined implement decompacting and tilling the top layer of the soil
Machine combinée pour le décompactage et l'ameublissement d'une couche de sol superficielle

(30) Priorität: 30.06.1984 DE 3424250; 26.07.1984 DE 3427655
(43) Veröffentlichungstag der Anmeldung: 24.05.1989
(62) Teilanmeldung aus: 85107788.3
(73) Patentinhaber: KUHN S.A., F-67706 Saverne Cedex (FR)
(72) Erfinder: Weichel, Ernst, D-7326 Heiningen (DE)
(74) Vertreter: Patentanwälte Leinweber & Zimmermann

(56) Entgegenhaltungen:
- EP-A- 0 039 792
- DE-A- 3 127 263
- DE-A- 3 228 891
- FR-A- 2 060 251
- FR-A- 2 435 889

## Beschreibung

Die vorliegende Erfindung betrifft eine Gerätekombination bestehend aus einem Gerät zur Bodenlockerung, das einen sich quer zur Fahrtrichtung erstreckenden Rahmen aufweist, an dem Haltestiele für an deren unteren Ende angebrachte Lockerungsschare befestigt sind, und einem Arbeitsgerät zur Krümelung einer obersten Bodenschicht, an dessem sich quer zur Fahrtrichtung erstreckenden Rahmen ein Getriebe und wenigstens ein motorisch angetriebener Werkzeuträger mit rotierenden Werkzeuge zur Krümelung der obersten Bodenschicht angeordnet sind, wobei das Arbeitsgerät zur Krümelung eine Dreipunktanbauvorrichtung aufweist, die Unterlenkerkonsolen und Oberlenkerkonsolen aufweist, mittels welcher das Arbeistgerät zur Krümelung an dem Kraftheber eines Schleppers oder an dem Rahmen des Gerätes zur Bodenlockerung kuppelbar ist.

Eine Gerätekombination dieser Gattung ist aus dem Prospekt "WEICHEL SCHICHTENGRUBBER + ROTOREGGE" mit Druckdatum 6/79 bekannt. Diese Gerätekombination besteht aus einem Gerät zur Bodenlockerung, das am Kraftheber des Schleppers angekuppelt wird, und einem Gerät zur Krümelung der obersten Bodenschicht, das im Gerät zur Bodenlockerung angekuppelt ist. Das Gerät zur Bodenlockerung weist einen Rahmen auf, der durch eine sich quer zur Fahrtrichtung erstreckendes Rahmenrohr gebildet ist, das zwei Teilstücken aufweist. Diese Teilstücke des Rahmenrohrs sind je mit einer Traverse, die sich etwa in Fahrtrichtung relativ weit nach vorn erstrecken, verbunden. An ihrer Vorderseite sind beide Traversen mit einem dreieckigen Anbaurahmen verbunden, der dazu dient, die Maschine an den Kraftheber eines Schleppers anzubauen. Damit das zapfwellenangetriebene Gerät zur Krümelung der obersten Bodenschicht höhenbeweglich an das Gerät zur Bodenlockerung angekuppelt werden kann, sind an den beiden Teilstücken des Rahmenrohrs des Gerätes zur Bodenlockerung je eine nach hinten ragende Verbindungsstange angelenkt. Diese Verbindungsstangen sind mittels an der Rückseite der Traversen befestigten Spindeln hohenverstellbar. Das Gerät zur Krümelung der obersten Bodenschicht weist einen sich quer zur Fahrtrichtung erstreckenden Rahmen auf, der an seiner Vorderseite eine Dreipunktanbauvorrichtung aufweist, die Unterlenkerkonsolen und Oberlenkerkonsolen besitzt. Das Gerät zur Krümelung der obersten Bodenschicht ist mit den Unterlenkerkonsolen an dem hinteren Ende je einer Verbindungsstange, und mit den Oberlenkerkonsolen, über ein Oberlenker am oberen Ende des dreieckigen Anbaurahmens angekuppelt. Der Rahmen des Gerätes zur Krümelung der obersten Bodenschicht ist an seinen beiden Enden mit je einer nach unten ragenden Lagerkonsole versehen, zwischen welchen sich ein Werkzeugträger erstreckt und gelagert ist. Dieser Werkzeugträger ist mit Werkzeuge zur Krümelung der obersten Bodenschicht versehen und ist über ein auf dem Rahmen angeordnetes Getriebe von der Zapfwelle des Schleppers angetrieben. Vorteilig ist bei dieser bekannten Gerätekombination, dass des Gerät zur Bodenlockerung und/oder das Gerät zur Krümelung der obersten Bodenschicht sowohl je einzeln eingesetzt, als auch mit weiteren Arbeitsgeräten kombiniert werden können. Diese bekannte Gerätekombination besitzt jedoch ein Nachteil. Obwohl in dem Prospekt sehr deutlich geschrieben wird, dass die Bauweise kurz ist, so dass die Möglichkeit besteht eine zusätzliche Sämaschine anzubauen, ist sie immer noch zu lang, was denn in den meisten Fällen zu Stabilitätsprobleme des Schleppers führen kann.

Der vorliegender Erfindung liegt demgegenüber die Aufgabe zu Grunde, die Gerätekombination, unter Beibehaltung ihrer Vorteile, so zu gestalten, dass sie eine äusserst kurze Baulänge aufweist.

Diese Aufgabe wird gemäss der vorliegenden Erfindung dadurch gelösst, das unterhalb der Oberlenkerkonsolen und oberhalb der Unterlenkerkonsolen der Dreipunktanbauvorrichtung des Gerätes zur Krümelung der obersten Bodenschicht eine Nische vorgesehen ist, in die der Rahmen des Gerätes zur Bodenlockerung im Bereich oberhalb des Getriebes und des Rahmens des Gerätes zur Krümelung der obersten Bodenschicht lösbar einsetzbar.

Dank dieser Anordnung besitzt die erfindungsgemässe Gerätekombination eine äusserst kurze Bauweise unter Beibehaltung des bekannten Vorteils, dass beide Geräte der Kombination sehr leicht und sehr schnell auseinander gebaut werden können und demzufolge auch separat oder in Kombination mit anderen Geräten verwendet werden können.

Vorteilhafterweise ist der Rahmen des Gerätes zur Bodenlockerung als einfaches Rohr ausgebildet.

Ferner sind die Haltestielen höhenverstellbar in an dem Rahmen des Gerätes zur Bodenlockerung angeordneten Stielhaltern anbringbar. Die Arbeitstiefe jeder Schar kann somit gegenüber der Arbeitstiefe der Werkzeuge zur Krümelung der obersten Bodenschicht einzeln eingestellt werden .Dadurch können zum Beispiel die Scharen, die den Boden in der Fahrspur des Schleppers lockern, etwas tiefer eingestellt werden.

Gemäss einem weiteren Merkmal der Erfindung erstrecken sich die Haltestielen zwischen den Bewegungsbahnen der Werkzeuge des Gerätes zur Krümelung der obersten Bodenschicht. Dadurch arbeitet die Gerätekombination verstopfungsfreier.

Vorzugsweise sind die Stielhalter mittels welcher die Haltestielen am Rahmen des Gerätes zur Bodenlockerung befestigt sind, am Rahmen seitlich verstellbar angeordnet. Dadurch kann, zum Beispiel wenn die Haltestielen sich zwischen den Bewegungsbahnen der Werkzeuge des Gerätes zur Krümelung der obersten Bodenschicht erstrecken, die Lage jedes Haltestieles optimal gegenüber den sich auf seinen beiden Seiten erstreckenden Werkzeuge zur Krümelung der obersten Bodenschicht eingestellt werden.

Es kann auch von Vorteil sein sämtliche Scharen des Gerätes zur Bodenlockerung gemeinsam einzustellen. Dadurch wird einerseits erreicht, dass die Einstellung der Arbeitstiefe der Scharen sehr schnell durchgeführt werden kann, und andererseits, dass sämtliche Haltestielen ihre relative vorbestimmte Lage gegeneinander beibehalten.

Demzufolge ist die Nische, so bemessen, dass der Rahmen des Gerätes zur Bodenlockerung in dieser Nische höhenverstellbar befestigt werden kann.

Vorzugsweise ist diese Höhenverstellbarkeit in einem gewissen Bereich stufenlos durchführbar.

Gemäss einer ersten Ausführung, ist das Gerät zur Bodenlockerung mit einer Dreipunktanbauvorrichtung versehen, mittels welcher die Gerätekombination mit dem Kraftheber eines Schleppers kuppelbar ist. In dieser Ausführung sind das Gerät zur Bodenlockerung und das Gerät zur Krümelung der obersten Bodenschicht starr aber höhenverstellbar Zusammengekuppelt.

Gemäss einer anderen Ausführung, wird die Gerätekombination direkt mittels der Dreipunktanbauvorrichtung des Gerätes zur Krümelung der obersten Bodenschicht an dem Schlepper gekuppelt. Hier sind die beide Geräte auch starr aber höhenverstellbar zusammengekuppelt.

Weitere Einzelheiten, vorteile und Merkmale der Erfindung ergeben sich aus der folgenden Beschreibung und der Zeichnungen, auf die bezüglich die Offenbarung aller nicht im Text beschriebenen Einzelheiten ausdrücklich verwiesen wird. Es zeigen :
- Fig. 1 :: eine schematische Seitenansicht auf ein erstes Ausführungsbeispiel einer erfindungsgemässen Gerätekombination,
- Fig. 2 :: eine schematische Seitenansicht auf das Gerät zur Bodenlockerung, gemäss diesem ersten Ausführungsbeispiel,
- Fig. 3 :: eine schematische Seitenansicht auf das Gerät zur Krümelung der obersten Bodenschicht,
- Fig. 4 :: eine schematische perspektivische Teilansicht des Rahmens des Gerätes zur Krümelung der obersten Bodenschicht,
- Fig. 5 :: eine schematische Seitenansicht auf ein anderes Ausführungsbeispiel einer erfindungsgemässen Gerätekombination,
- Fig. 6 :: eine schematische Teilseitenansicht auf das Gerät zur Bodenlockerung gemäss diesem anderen Ausführungsbeispiel, und
- Fig. 7 :: eine schematische Draufsicht auf das Gerät zur Bodenlockerung gemäss diesem anderen Ausführungsbeispiel.

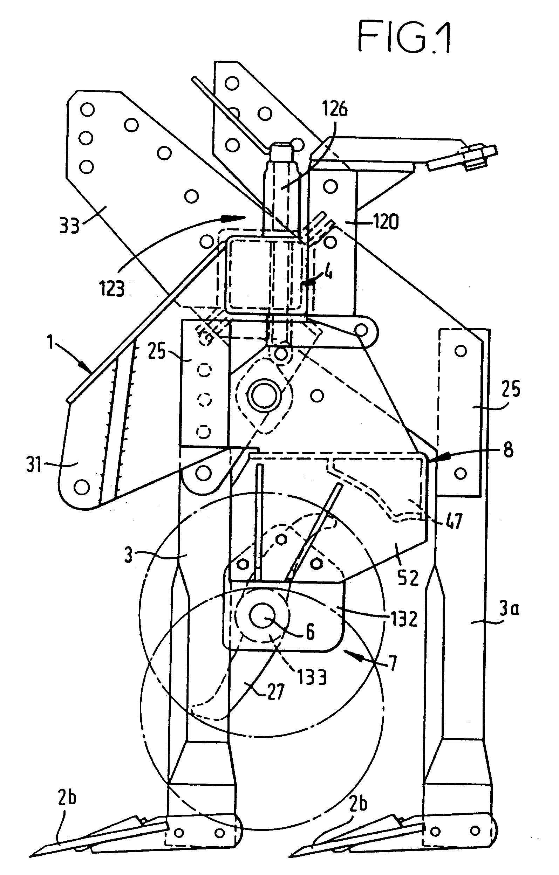

Wie auf Figur 1 zu ersehen ist, weist die erfindungsgemässe Gerätekombination ein Gerät zur Bodenlockerung (1) und ein Gerät zur Krümelung der obersten Bodenschicht (7) auf.

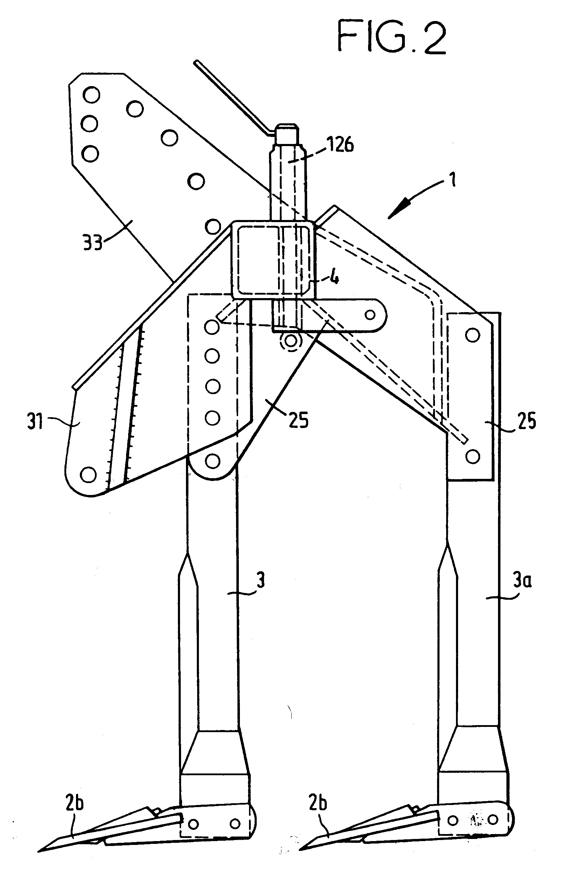

Aus den Figuren 1 und 2, kann entnommen werden, dass das Gerät zur Bodenlockerung (1) einen sich quer zur Fahrtrichtung erstreckenden Rahmen (4) aufweist, der als einbalkiges Rahmenrohr ausgebildet ist. Dieser Rahmen (4) weist nach vorne unten ragende Konsolen (31) und nach vorne oben ragende Konsolen (33) auf, welcher zur Kupplung der Gerätekombination an dem Kraftheber eines nicht dargestellten Schleppers dienen.

Am Rahmen (4) des Gerätes zur Bodenlockerung (1) sind ferner Stielhalter (25) angeordnet, in je welchen einen Haltestiel (3, 3a) für eine Schar (2b) höhenverstellbar und leicht abnehmbar angebracht ist. Diese Stielhalter (25) sind am Rahmen (4) angeklemmt und sind seitlich verstellbar.

Jede Schar (2b) weist einen Scharhalter auf, mittels welches sie an unteren Ende des zugeordneten Haltestieles (3, 3a) lösbar befestigt ist.

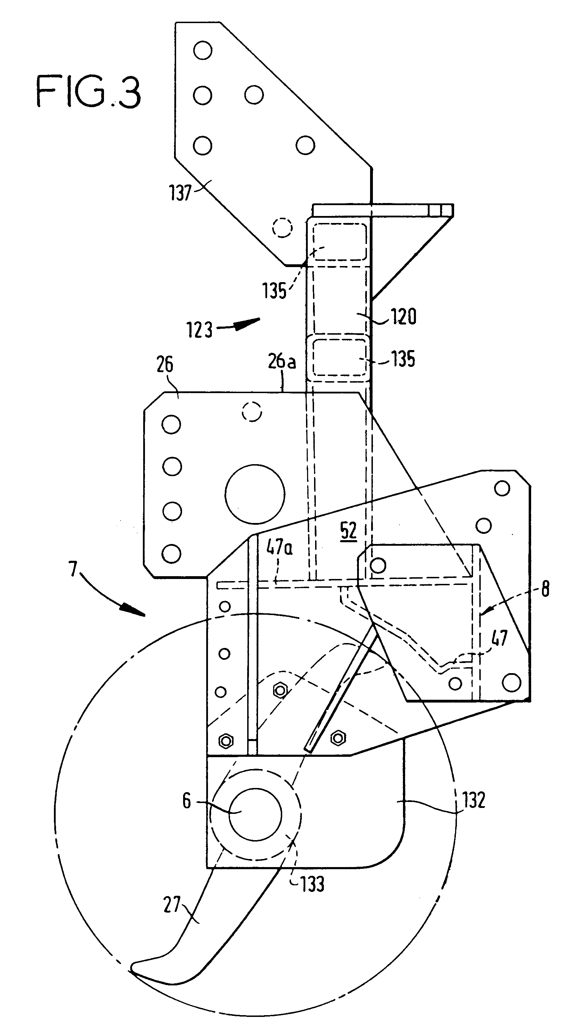

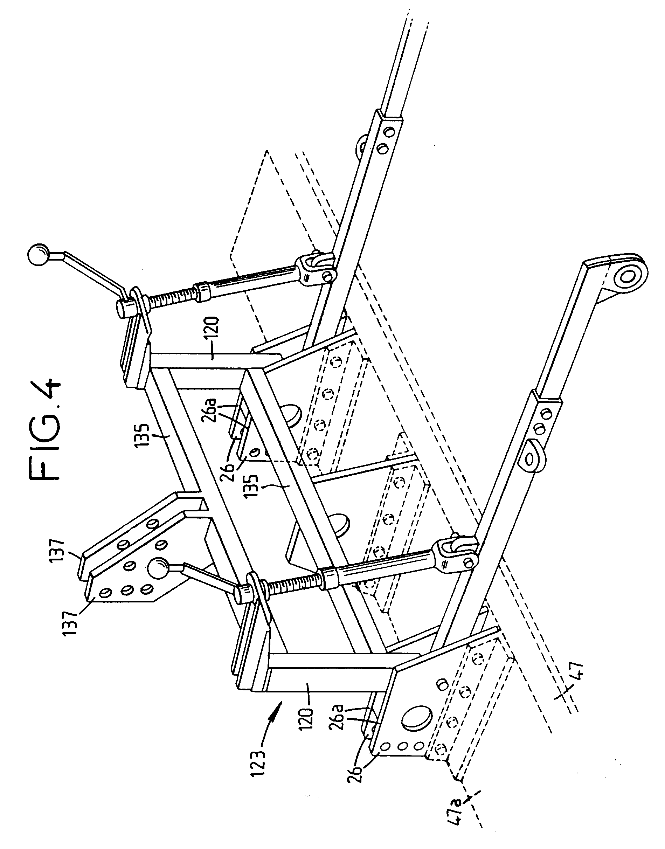

Das mit dem Gerät zur Bodenlockerung (1) kombinierte Gerät zur Krümelung einer obersten Bodenschicht (7) ist auf der Figur 3 in abgebauter Lage zu sehen. Dieses Gerät (7) weist einen Rahmen (8) auf, der als Hohlträger (47) mit einer nach vorne verlängerten Wand (47a) ausgebildet ist. Auf diesem Rahmen (8) ist eine Dreipunktanbauvorrichtung befestigt. Diese Dreipunktanbauvorrichtung (Figur 4) weist zwei paare Unterlenkerkonsolen (26), die auf der Wand (47a) des Hohlträgers (47) befestigt sind und zwischen je welchen einen Ständer (120) eingeschweisst ist, wobei diese Ständer (120) ihrerseits mittels zwei Traversen (135) miteinander verbunden sind, und Oberlenkerkonsolen (137), die in der Mitte der oberen Traverse (135) angeschweisst sind, auf. Unter der unteren Traverse (135) erstreckt sich ein nicht dargestelltes Getriebe, dessen Eingangswelle von der Zapfwelle des ebenfalls nicht dargestellten Schleppers angetrieben wird. Die oberkante (26a) der Unterlenkerkonsolen (26) bildet die untere Begrenzung einer Nische (123), die nach hinten von den Ständern (120) und nach oben von den Oberlenkerkonsolen (137) begrenzt wird. Diese Nische (123) erstreckt sich ebenfalls oberhalb des nicht dargestellten Getriebes.

An beiden Seiten des Hohlträgers (47) sind seitliche Lagerkonsolen befestigt. Diese Lagerkonsolen bestehen aus Lagerschilden (52) an je welcher eine Lagerplatte (132) lösbar befestigt ist, die ein Lager (133) eines rotierenden Werkzeugträgers (6) mit Werkzeuge zur Krümelung des Bodens (27) aufnimmt. Dieser rotierende mit den Werkzeuge versehenen Werkzeugträger (6) wird über das nicht dargestellte Getriebe von der Zapfwelle des ebenfalls nicht dargestellten Schleppers motorisch angetrieben.

Dank der Nische (123) des Gerätes zur Krümelung der obersten Bodenschicht (7), kann, wie das auf Figur 1 ganz deutlich zu sehen ist, das Gerät zur Bodenlockerung (1) ganz kurz mit dem Gerät zur Krümelung (7) gekuppelt werden. Bei dieser Kupplung erstreckt sich der Rahmen (4) so in der Nische (123), dass er im Bereich oberhalb des nicht dargestellten Getriebes und der Wand (47a) des Hohlträgers (47) angeordnet ist. Diese Kupplung der beide Geräte (1 und 7) ist starr, jedoch höhenverstellbar. Dadurch ist die Nische (123) so bemessen, dass das Gerät zur Bodenlockerung (1) gegenüber dem Gerät zur Krümelung mittels Spindeln (126) in einem gewissen Bereich stufenlos höhenverstellbar ist.

Aus Figur 1, kann auch noch entnommen werden, dass das Gerät zur Bodenlockerung (1) gegenüber dem Gerät zur Krümelung (7) so angeordnet ist, dass die vorderen Scharen (2b) sich vor und unterhalb der Bewegungsbahnen der rotierenden Werkzeuge (27) erstrecken. Desweiteren erstrecken sich die Haltestielen (3), mittels welcher diese vordere Scharen (2b) am Rahmen (4) befestigt sind, zwischen den Bewegungsbahnen der rotierenden Werkzeuge (27).

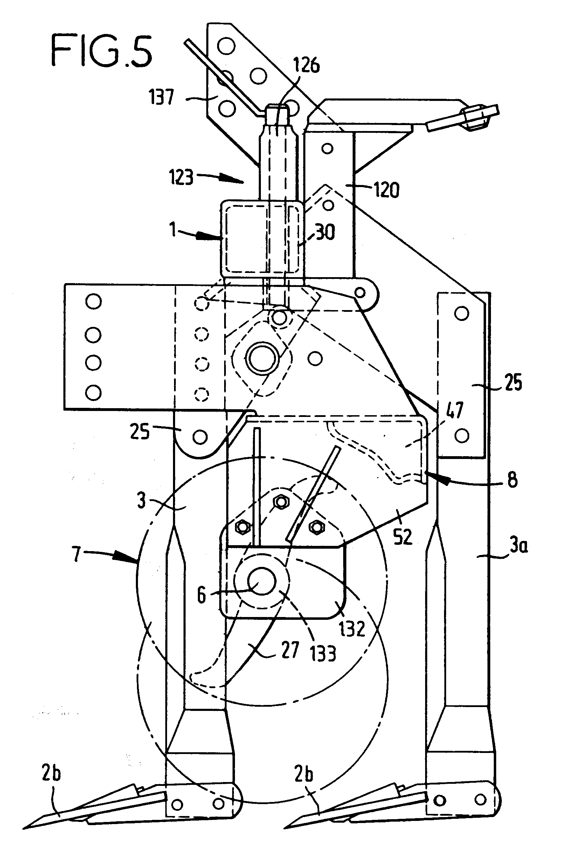

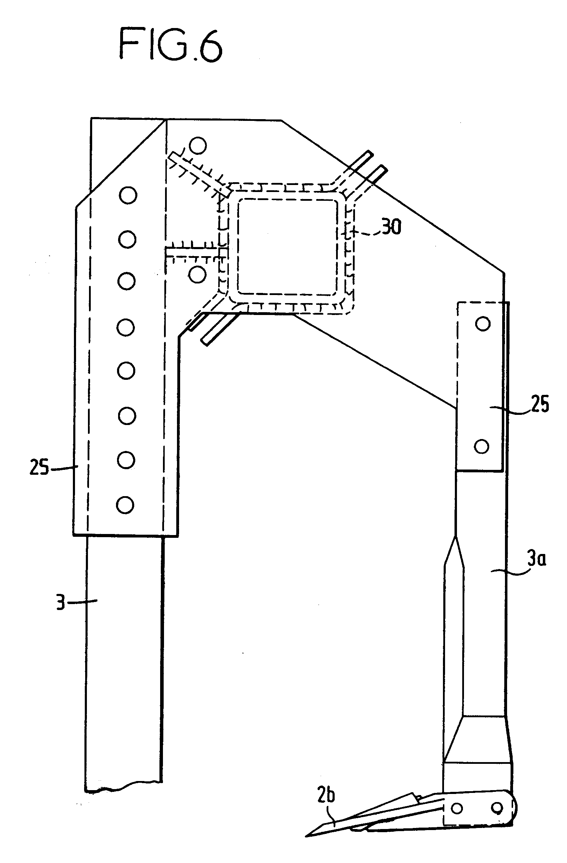

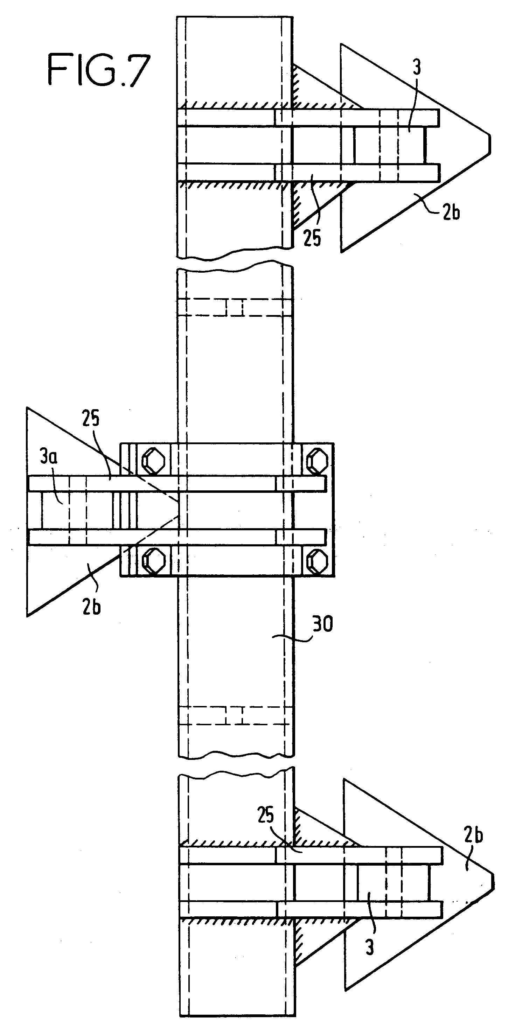

Die Gerätekombination gemäss Figuren 5 bis 7 entscheidet sich von der Gerätekombination nach Figuren 1 bis 4 im wesentlichen durch die Konstruktion des Gerätes zur Bodenlockerung (1). Dieses Gerät zur Bodenlockerung (1) weist einen Rahmen auf, der durch ein einfaches Rohr (30) ohne Unter - und Oberlenkerkonsolen gebildet ist. An diesem Rahmen (30) sind auch Stielhalter (25) angeordnet, in je welcher einen Haltestiel (3, 3a) für eine Schar (2b) höhenverstellbar und leicht abnehmbar angebracht ist. Die Scharen (2b) sind denen der Ausführung nach Figuren 1 bis 4 gleich. Auch sind die vorderen Scharen (2b) vor und unterhalb der Bewegungsbahnen der rotierenden Werkzeugen (27) des Gerätes zur Krümelung der obersten Bodenschicht (7) angeordnet, Bewegungsbahnen zwischen welcher sich die Haltestielen (3) der vorderen Scharen (2b) erstrecken.

Bei der Kupplung des Gerätes zur Bodenlockerung (1) mit dem Gerät zur Krümelung (7) erstreckt sich der Rahmen (30) des Gerätes zur Bodenlockerung (1) ebenfalls in der Nische (123) des Gerätes zur Krümelung. Auch ist diese Kupplung starr mit Möglichkeit einer Höhenverstellbarkeit des Gerätes zur Bodenlockerung (1) gegenüber dem Gerät zur Krümelung (7).

Die Gerätekombination dieser Ausführungsform wird am Schlepper direkt mittels der Dreipunktanbauvorrichtung des Gerätes zur Krümelung (7) angebaut.

## Patentansprüche

1. Gerätekombination bestehend aus einem Gerät zur Bodenlockerung (1), das einen sich quer zur Fahrtrichtung erstreckenden Rahmen (4 ;30) aufweist, an dem Haltestiele (3, 3a) für an deren unterem Ende angebrachte Lockerungsschare (2b) befestigt sind, und einem Arbeitsgerät zur Krümelung einer obersten Bodenschicht (7), an dessem sich quer zur Fahrtrichtung erstreckenden Rahmen (47, 47a) ein Getriebe und wenigstens ein motorisch angetriebener Werkzeugträger (6) mit rotierenden Werkzeuge (27) zur Krümelung der obersten Bodenschicht angeordnet sind, wobei das Arbeitsgerät zur Krümelung (7), eine Dreipunktanbauvorrichtung (26, 120, 135, 137) aufweist, die Unterlenkerkonsolen (26) und Oberlenkerkonsolen (137) aufweist, mittels welcher das Arbeitsgerät zur Krümelung (7) an dem Kraftheber eines Schleppers oder an dem Rahmen (4) des Gerätes zur Bodenlockerung (1) kuppelbar ist, dadurch gekennzeichnet, dass unterhalb der Oberlenkerkonsolen (137) und oberhalb der Unterlenkerkonsolen (26) eine Nische (123) vorgesehen ist, in die der Rahmen (4 ; 30) des Gerätes zur Bodenlockerung (1) im Bereich oberhalb des Getriebes und des Rahmens (47, 47a) des Gerätes zur Krümelung (7) lösbar einsetzbar ist.

2. Gerätekombination nach Anspruch 1, dadurch gekennzeichnet, dass der Rahmen (4 ; 30) des Gerätes zur Bodenlockerung (1) als einfaches Rohr ausgebildet ist.

3. Gerätekombination nach Anspruch 1 oder 2, dadurch gekennzeichnet, dass die Haltestiele (3, 3a) höhenverstellbar in an dem Rahmen (4, ; 30) des Gerätes zur Bodenlockerung angeordneten Stielhaltern (25) anbringbar sind.

4. Gerätekombination nach mindestens einem der Ansprüche 1, 2 oder 3, dadurch gekennzeichnet, dass die Haltestiele (3, 3a) leicht abnehmbar in an dem Rahmen (4 ; 30) des Gerätes zur Bodenlockerung angeordneten Stielhaltern (25) anbringbar sind.

5. Gerätekombination nach mindestens einem der Ansprüche 3 oder 4, dadurch gekennzeichnet, dass die Stielhalter (25) an dem Rahmen (4 ; 30) des Gerätes zur Bodenlockerung (1) seitlich verstellbar sind.

6. Gerätekombination nach mindestens einem der Ansprüche 1 bis 5, dadurch gekennzeichnet, dass sich die Haltestielen (3) zwischen den Bewegungsbahnen der Werkzeuge (37) zur Krümelung der obersten Bodenschicht erstrecken.

7. Gerätekombination nach mindestens einem der Ansprüche 1 bis 6, dadurch gekennzeichnet, dass der Rahmen (4 ; 30) des Gerätes zur Bodenlockerung (1) in der Nische (123) des Gerätes zur Krümelung (7) starr jedoch höhenverstellbar befestigt ist.

8. Gerätekombination nach Anspruch 7, dadurch gekennzeichnet, dass das Gerät zur Bodenlockerung (1) und das Gerät zur Krümelung (7) in einem gewissen Bereich stufenlos höhenverstellbar zusammengekuppelt sind.

## Claims

1. Apparatus combination consisting of a apparatus (1) for loosening the soil with a frame (4; 30) which extends transversely to the direction of travel and to which supporting posts (3, 3a) for loosening blades (2b) attached to their lower end are fixed, and an apparatus (7) for crumbling a topmost layer of soil on the frame (47, 47a) of which extending transversely to the direction of travel are disposed a gear assembly and at least one motor-driven tool carrier (6) with rotating tools (27) for crumbling the topmost layer of soil, the apparatus (7) for crumbling comprising a three-point attachment (26, 120, 135, 137) with lower brackets (26) and upper brackets (137) by means of which the apparatus (7) for crumbling can be coupled to the three-point hitch of a tractor or to the frame (4) of the apparatus (1) for loosening the soil, characterised in that a recess (123) is provided under the upper brackets (137) and over the lower brackets (26) into which the frame (4; 30) of the apparatus (1) for loosening the soil can be inserted detachably in the area above the gear assembly and the frame (47, 47a) of the apparatus (7) for crumbling.

2. Apparatus combination according to claim 1, characterised in that the frame (4; 30) of the apparatus (1) for loosening the soil is embodied as a simple tube.

3. Apparatus combination according to claim 1 or 2, characterised in that the supporting posts (3, 3a) can be upwardly adjustably attached in post mountings (25) disposed on the frame (4; 30) of the apparatus for loosening the soil.

4. Apparatus combination according to at least one of claims 1,2 or 3, characterised in that the supporting posts (3, 3a) can be attached in an easily detachable manner in post mountings (25) disposed on the frame (4; 30) of the apparatus for loosening the soil.

5. Apparatus combination according to at least one of claims 3 or 4, characterised in that the post mountings (25) are adjustable laterally on the frame (4; 30) of the apparatus (1) for loosening the soil.

6. Apparatus combination according to at least one of claims 1 to 5, characterised in that the supporting posts (3) extend between the paths of movement of the tools (37) for crumbling the topmost layer of soil.

7. Apparatus combination according to at least one of claims 1 to 6, characterised in that the frame (4; 30) of the apparatus (1) for loosening the soil is fixed rigidly but adjustable upwardly in the recess (123) of the apparatus (7) for crumbling.

8. Apparatus combination according to claim 7, characterised in that the apparatus (1) for loosening the soil and the apparatus (7) for crumbling are coupled together so as to be upwardly adjustable within a certain range in a continuous manner.

## Revendications

1. Combinaison d'appareils comportant un apprareil (1) d'ameublissement du sol présentant un châssis (4 ; 30) qui s'étend transversalement à la direction d'avance et auquel sont fixés des bras porteurs (3, 3a) à l'extrémité inférieure desquels sont implantés des socs ameublisseurs (2b), et un appareil (7) d'émiettement d'une couche superficielle de terre au châssis (47, 47a) duquel, qui s'étend transversalement à la direction d'avance, sont implantés une transmission et au moins un support (6) d'outils (27) rotatifs pour l'émiettement de la couche superficielle de terre entraîné par une source motrice, lequel appareil d'émiettement (7) comportant un dispositif (26,120,135,137) d'attelage à trois points, qui présente les consoles (26) pour les barres inférieures et les consoles (137) pour la barre supérieure au moyen desquelles l'appareil d'émiettement (7) peut être attelé au dispositif de relevage d'un tracteur ou au châssis (4) de l'appareil d'ameublissement (1), caractérisée en ce que en dessous des consoles supérieures (137) et au-dessus des consoles inférieures (26) est prévue une niche (123) dans laquelle peut être logé de manière démontable le châssis (4 ; 30) de l'appareil d'ameublissement (1) dans la zone au-dessus de la transmission et du châssis (47, 47a) de l'appareil d'émiettement (7).

2. Combinaison d'appareils selon la revendication 1, caractérisée en ce que le châssis (4 ; 30) de l'appareil d'ameublissement (1) est constitué d'un simple tube.

3. Combinaison d'appareils selon la revendication 1 ou 2, caractérisée en ce que les bras porteurs (3, 3a) peuvent être liés, de manière réglable en hauteur, à des porte-outils (25) prévus sur le châssis (4 ; 30) de l'appareil d'ameublissement.

4. Combinaison d'appareils selon l'une au moins des revendications 1,2 ou 3 caractérisée en ce que les bras porteurs (3, 3a) peuvent être liés, de manière facilement démontable, à des porte-outils (25) prévus sur le châssis (4 ; 30) de l'appareil d'ameublissement.

5. Combinaison d'appareils selon l'une au moins des revendications 3 ou 4, caractérisée en ce que les porte-outils (25) sont réglables latéralement sur le châssis (4 ; 30) de l'appareil d'ameublissement (1).

6. Combinaison d'appareils selon l'une au moins des revendications 1 à 5, caractérisée en ce que les bras porteurs (3) s'étendent entre les trajectoires des outils (37) d'émiettement de la couche superficielle de terre.

7. Combinaison d'appareils selon l'une au moins des revendications 1 à 6, caractérisée en ce que le châssis (4 ; 30) de l'appareil d'ameublissement (1) est fixé dans la niche (123) de l'appareil d'émiettement (7) de manière rigide, mais néanmoins réglable en hauteur.

8. Combinaison d'appareils selon la revendication 7, caractérisée a ce que l'appareil d'ameublissement (1) et l'appareil d'émiettement (7) sont accouplés l'un à l'autre de sorte à être dans une certaine plage réglable en hauteur de manière continue.
